# NEW EUROPEAN PATENT SPECIFICATION

(11) **EP 1 335 266 B2**
(45) Date of publication and mention of the opposition decision: **31.12.2008**
(45) Mention of the grant of the patent: 18.05.2005
(21) Application number: 03380022.8
(22) Date of filing: 07.02.2003
(51) Int. Cl.: G06F 1/00, H04L 29/06, H04L 9/32, G06F 21/00

(54) **Distribution and management process and system for mobile terminals for use rights associated with a purchased content.**
Verfahren und System für mobile Endgeräte zum Verteilen und Verwaltung von Benutzungsrechten, die mit dem Kauf eines Inhalts assoziert sind
Procédé et système de répartition et de gestion pour des terminaux mobiles des droits d'utilisation associés à l'achat d'un contenu

(30) Priority: 12.02.2002 ES 200200333
(43) Date of publication of application: 13.08.2003
(73) Proprietor: Vodafone Group PLC, Newbury Berkshire RG14 2FN (GB)
(72) Inventor: Garcia Garcia-Doncel, Jesus, 28023- Las Rozas., Madrid (ES); Borrero Ortiz, Santiago, 28028- Madrid (ES)
(74) Representative: Keston, David Arthur

(56) References cited:
- WO-A-01/41027
- WO-A-01/63387
- WO-A-01/98903
- CHOUDHURY A K ET AL: "COPYRIGHT PROTECTION FOR ELECTRONIC PUBLISHING OVER COMPUTER NETWORKS" , IEEE NETWORK, IEEE INC. NEW YORK, US, VOL. 9, NR. 3, PAGE(S) 12-20 , US XP000505280 ISSN: 0890-8044 * page 15 - page 18 *

## Description

### OBJECT OF THE INVENTION

The object of the invention concerning us is to provide a process and a device for mobile telephones in the mobile telephone network which permit carrying out the secure distribution and management of use rights associated with a purchased content, such that it prevents piracy and the acquisition of the contents included in digital files comprising different types of information of interest for the user, such as music, video, etc.

### BACKGROUND OF THE INVENTION

The vertiginous development of new technologies and the advance in the processing of digital information has opened a new horizon of possibilities in the business of creation, distribution and sale of contents stored in files containing information of interest for the user (music, video, etc.).

The popularization of internet has enabled the instantaneous distribution of said contents at the same time that it facilitates the piracy thereof.

These facts take on special relevance in the music industry with the emergence of the MP3 files format, which enables maximum copying and distribution of music files with a sound fidelity comparable to that of compact discs.

In the face of this drawback, several groups from the music industry and technological giants came together and created the Safe Digital Music Initiative (SDMI) for Digital Rights Management (DRM) and to protect artists and publishers from the dangers inherent to distribution on the internet, therefore, together with the digital files where the content is stored, a use rights file (voucher) must be purchased, by means of which use rights over said content are defined, it is therefore necessary for the distribution of said use rights files to be carried out securely to those users who have purchased a content, such that only this user can be the person who can access the content of the digital file by making use of the use rights file.

Technology has continued advancing, permitting the distribution and reproduction of contents to devices that are more and more varied and smaller. In this sense, mobile terminals, which are becoming more and more popular and have greater capabilities, take on special importance.

There is no process and system in this sector permitting carrying out the secure distribution of use rights files, and which also associates said use rights files with the smart card that the operator provides the user when becoming a subscriber in the operator of the mobile telephone network and which must be included in the mobile terminal so as to permit making calls, such that it permits updating terminals without losing the purchased rights since these are associated with the card and not with the terminal.

WO-A-01/98903 discloses a process for forwarding digital files and corresponding licenses, using encryption with public keys and decryption with private keys.

WO-A-01/63387 discloses a system for securely distributing data on a network, iricluding the step of providing an encoded file incorporating at least one encoded use right and/or access right.

WO-A-01/41027 disclose a system and method for secure electronic digital rights management,'involving the distribution of contents and the purchase of licenses.

### DESCRIPTION OF THE INVENTION

To solve the aforementioned drawbacks, the invention provides a process and device which permit carrying out the secure distribution of use rights files defining the use of a content included in a digital file (such as music, video, etc.).

The use rights file can be purchased independently from the digital file storing the content, and the distribution and proper reproduction of said content are not object of the present invention, but rather this is only concerned with proper distribution of the file of use rights that are associated with the digital right.

To prevent the illegal distribution of contents, encrypting systems have been foreseen consisting of assigning a pair of keys constituted by a public key and a private key to each device, both being mathematically related, and the first one being known by the rest of the devices and the second one known only by the device in question. The private key never travels nor goes outside of said device, such that for sending the contents, these are encrypted with the public key of the device, and they can only be decrypted by means of the private key of said device.

These keys are assigned by certifying authorities, among which there is a hierarchical relationship. In the case of smart cards, the manufacturers thereof are those who generate the private and public keys, recording the private key in the card and providing the public keys to the network operator buying the cards.

Then, the process of the invention is characterized in that after receiving a purchase request of a use rights file, it comprises the following phases:
- generating a random session key and the use rights file;
- obtaining the public key of the smart card conventionally associated with the mobile terminal;
- encrypting the random session key with the public key of the smart card;
- encrypting the use rights file with the random session key;
- sending the encryptions carried out to the mobile terminal, where they are received;
- decrypting, in the mobile terminal, the random session key by means of the private key of its smart card; and
- decrypting, in the mobile terminal, the rights file with the random session key obtained in the previous decryption to securely obtain said use rights file since the random session key can only be obtained by the one having the private key of the card of the mobile terminal, upon having been encrypted with the public key of the smart card of the mobile terminal, and therefore it is only permitted to decrypt the use rights file with the delivered session key, which is also random, in other words, different for each distribution.

To permit obtaining the public key of the smart cards, said keys are stored in the use files server.

The process of the invention also foresees that after receiving a purchase request of a use rights file, the cost representing obtaining said use files is sent to the mobile terminal and acceptance is requested, as is conventionally carried out in other processes by means of mobile terminals: pre-payment or by means of deferred payment.

Furthermore, the process of the invention foresees carrying out a mutual identification process between the mobile terminal and the use rights file server.

As was previously mentioned, the invention also consists of a system for mobile terminals which permits carrying out the distribution and management of use rights files associated with a purchased content, comprising a server provided with means for receiving a purchase request of a use rights file, means for generating said use rights file. Each mobile terminal is provided with a smart card that is provided with means for storing its own private key, to which a public key is also assigned.

The novelty of the device of the invention is determined by the fact that the server furthermore comprises means for generating a random session key, means for storing the public key of the smart card of the mobile terminal, means for encrypting the random session key by means of the public key of the mobile terminal, means for encrypting the use rights file by means of the random session key, for sending the encrypted signals to the mobile terminal. These encrypted signals are received by the mobile terminal where the use rights file is decrypted, therefore said mobile terminal has means for decrypting the random session key by means of the private key of the smart card of the mobile terminal such that it obtains the random session key, and means for decrypting the use rights file by means of the obtained random session key, finally obtaining said use rights file.

In smart cards with cryptographic capacities, the private key is stored in its WIM (Wireless Identification Module) application, foreseen for storing user keys and calculating and verifying digital signatures.

For ensuring the identity of the parties, the system of the invention foresees the mutual identification between the server and the mobile terminal under any of the established conventional processes for carrying out this function. Therefore, the decryption means are included in the smart card associated with each mobile terminal.

Furthermore, and in correspondence with the described process, the system of the invention foresees the inclusion of the means conventionally included for verifying whether the user who downloads the use rights file has a balance to pay for the requested content, and in a negative case, it is not sent.

In order to aid in better understanding this specification and forming an integral part thereof, a single drawing is attached below which shows the object of the invention with an illustrative and non-limiting character.

### BRIEF DESCRIPTION OF THE DRAWING

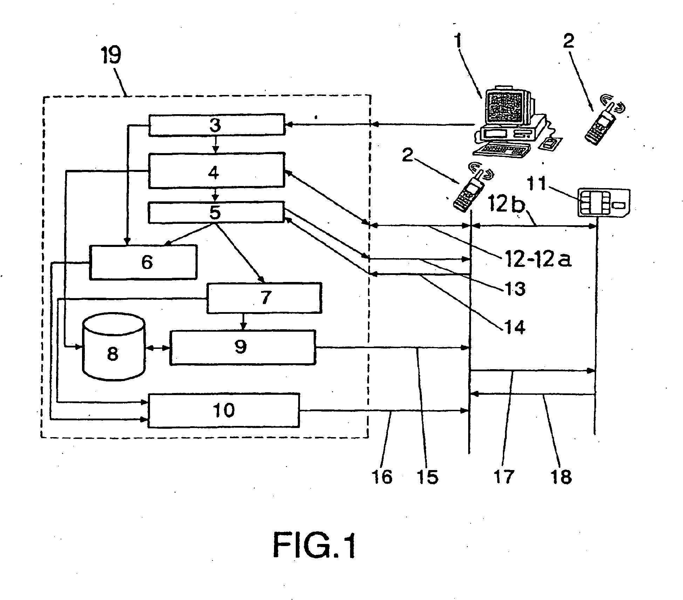

Figure 1.- Shows a functional block diagram of a possible embodiment example of the system of the invention.

### DESCRIPTION OF THE PREFERRED EMBODIMENT

A description of the invention based on the aforementioned drawing is made below.

As previously mentioned, the system of the invention is provided for permitting securely carrying out the distribution of use right files associated with a digital file including a content of interest for the user, such as music, video, etc., and which specifies the conditions of use of said content, the content can therefore not be accessed without the use rights file.

Purchase of the use right file can be completely independent from the purchase of the digital file including the information content and purchased by the user, the distribution and reproduction of said content not being the object of the invention, but rather the object is only focused on the proper distribution of the use rights file, as previously mentioned.

To carry out the purchase of a use rights file, a request is submitted through any device, such as a personal computer 1 or from a mobile terminal 2, which can be the user's own terminal or any other.

The user makes the request of the use rights file from a WAP web, SMS or from any other one.

The system of the invention is materialized in a server 19 which receives the request that is made, it therefore has a reception module 3 of the request made, which in the embodiment example foresees the inclusion of a mutual identification module 4 for mutually identifying the server 19 and the mobile terminal 2 to which the use rights file is sent for ensuring the authenticity of the server and of the mobile terminal.

The mutual identification process can be any of those conventionally used in the state of the art for different applications, and it could even be unnecessary, as in the case when a request is made from a web page in the zone in which the mutual identification has been previously carried out.

By way of example, a possible conventional mutual identification manner is described, consisting of sending an encrypted text from the mobile terminal 2 with the public key of the server. At this point, it is important to indicate that in the state of the art, as was described in the section of the description of the invention, each device is assigned a public and private key, wherein the public key is known by the different devices, and the private one is known only by the device in question, and all this such that the private key of each one of the devices never travels towards the remaining devices, and this key is used for decrypting the information that is encrypted with the public keys of the devices, such that only the messages can be decrypted with the private key of each device. Therefore, in the example concerning us, the server receives the message encrypted with its public key and decrypts the message by means of its private key. Once it is decrypted, it encrypts the message again with the public key of the mobile terminal 2, which, in the specific embodiment example, uses the public key of the smart card 11 that mobile terminals 2 need for being able to make calls, and which is purchased by the user when he/she subscribes to an operator of the mobile telephone network. The public key of the smart card 11 is stored in a database 8 of the server 19 to which the mutual identification module 4 accesses.

The mobile terminal 2 receives the encrypted message and passes it to the smart card 11 which, by means of its private identification key, decrypts the message and compares the message sent with the one received, such that if they coincide, the authentication of the server 19 is thereby carried out.

Furthermore, the server 19 has a payment acceptance module 5 which sends the cost of acquiring the use rights file to the user by means of his/her mobile terminal 2, which sends payment acceptance that is detected in the payment acceptance module 5, which activates a use rights file generator 6 which is also connected to the request reception module 3, such that when a use rights file request has been received and payment thereof has been accepted, the use rights file generator generates said file and sends it to a use rights file encryption module 10 with a random session key, the server 19 therefore includes a random session key generator 7 that is connected to the module 10 for carrying out said encryption and sends it 16 to the mobile terminal 2.

The database 8 is furthermore connected to an encryption module 9 of the random session key with the public key of the smart card 11 of the mobile terminal 2 and sends 15 to the mobile terminal 2 said use rights file encrypted with the random session key.

The mobile terminal 2 receives the encrypted signals 15, 16 and requests 17 the smart card 11 to decrypt the random session key with its private key, the smart card 11 obtaining the random session key and sends it 18 to the mobile terminal 2, which decrypts the use rights file by means of said random session key since said use rights file was encrypted with the random session key, thus securely obtaining the use rights file.

In a preferred embodiment of the invention, the WIM (Wireless Identification Module) application is used which is conventionally loaded in the smart card 11 and which has cryptographic capabilities. This WIM application is conventionally foreseen for storing private and public keys and calculating and verifying digital signatures.

By way of example, the content could consist of downloading a CD-Rom, and the use rights file could indicate that it is only desired to hear its content three times, such that if, after hearing it three times, hearing it is of interest for the user, new rights could be bought to listen to the contents whenever desired, he/she would therefore have to download another rights file (voucher).

The user must therefore have a mobile with a player which permits listening to the CD and the corresponding application which permits managing the use rights file according to the system of the invention, as has been described. Since the user has downloaded the content of the CD, he/she can buy the additional rights for this content without needing to download the entire CD again.

## Claims

1. A distribution and management process for use rights associated with a purchased content for mobile terminals, wherein a purchase request of a use rights file is received which is associated with the purchase of a content included in a digital file, such that the digital file cannot be used without the use rights file, as the use rights file specifies the permitted use of the purchased content, the process allowing the use rights file and the digital file to be independently purchased; the process further comprising the use of private and public keys granted by certifying authorities to different devices for making it possible to encrypt and decrypt signals exchanged between said devices, each private key being known only by the respective device to which it corresponds, whereas the public keys are known by all of said devices;
**characterized in that** after receiving said request, the process comprises the following steps:
generating a random session key and generating the use rights file;
obtaining the public key of a smart card (11), said smart card being conventionally associated with a mobile terminal (2);
encrypting the random session key with the public key of the smart card (11);
encrypting the use rights file with the random session key;
sending (15, 16) the encryptions carried out to the mobile terminal, the encryptions being received in the mobile terminal (2);
decrypting, in the mobile terminal, the random session key by means of the private key of its smart card; and
decrypting, in the mobile terminal, the rights file with the random session key, obtained in the previous decryption step, to obtain said use rights file;
the private key used being a private key of a Wireless Identification Module (WIM) application of the smart card.

2. A process according to claim 1, wherein after receiving a purchase request of a use rights file, a cost representing obtaining said use rights file is sent to the mobile terminal and acceptance is requested.

3. A process according to claim 2, wherein the purchase of the content is selectively carried out by means of: pre-payment or deferred payment, after receiving acceptance confirmation.

4. A process according to claim 1, wherein a mutual identification process is carried out between the mobile terminal (2) and a server (19) of the use rights file.

5. A distribution and management system for use rights associated with a purchased content for mobile terminals, comprising
a server (19) provided with means for receiving a purchase request of a use rights file associated with a content included in a digital file, such that the digital file cannot be used without the use rights file, as the use rights file specifies the permitted use of the purchased content, the system being arranged so that it is possible to purchase the use rights file and the digital file independently; the mobile terminals (2) having a smart card (11) provided with means for storing a private key of its own to which a public key is also assigned, said public and private keys being granted by certifying authorities for carrying out the encryption and decryption of signals exchanged between different devices;
**characterized in that** the server (19) comprises
means (6) for generating the a use rights file upon receipt of a use rights file purchase request,
means (7) for generating a random session key,
means (8) for storing the public key of the smart card (11) of the mobile terminal (2), and
means (9) for encrypting the random session key by means of the public key of the smart card (11),
means (10) for encrypting the use rights files by means of the random session key,
sending (15, 16) the encrypted signals to the mobile terminal (2), which is arranged to receive said encrypted signals, said terminal (2) including in its smart card (11) means for decrypting the random session key by means of its private key to obtain said random session key, the mobile terminal (2) further comprising means for decrypting the use rights file by means of the obtained random session key; all this so that the mobile terminal (2) obtains said use rights file after having made a purchase request of a use rights file;
the means for decrypting the random session key by means of the private key being arranged to use as said private key, a private key of a Wireless Identification Module application of the smart card.

6. A system according to claim 5, further comprising means (5) for verifying whether the user who is downloading the use rights file has a balance to pay for the requested content, and in a negative case, it is not sent.

7. A system according to claim 5, wherein a mutual identification between the server (19) and the mobile terminal (2) is carried out.

## Patentansprüche

1. Ein Verteilungs- und Managementverfahren für mit einem gekauften Inhalt für Mobilterminals verknüpfte Benutzungsrechte, wobei eine Anforderung zum Kauf einer Benutzungsrechtedatei empfangen wird, die mit dem Kauf eines Inhalts in einer digitalen Datei verknüpft ist, so dass die digitale Datei nicht ohne die Benutzungsrechtedatei benutzt werden kann, weil die Benutzungsrechtedatei die erlaubte Benutzung des gekauften Inhalts vorschreibt, und das Verfahren den Kauf der Benutzungsrechtedatei und der digitalen Datei unabhängig voneinander gestattet; und das Verfahren weiterhin die Benutzung privater und öffentlicher Schlüssel gestattet, die verschiedenen Geräten von bescheinigenden Stellen gewährt werden, um die Verschlüsselung und Entschlüsselung von zwischen den Geräten ausgetauschten Signalen zu ermöglichen; wobei jeder private Schlüssel nur dem mit ihm korrespondierenden entsprechenden Gerät bekannt ist, während die öffentlichen Schlüssel allen Geräten bekannt sind; **dadurch gekennzeichnet, dass** nach Empfang der Anforderung das Verfahren folgende Schritte umfasst:
- Erzeugen eines Zufallssitzungsschlüssels und Erzeugen der Benutzungsrechtedatei;
- Erwerben des öffentlichen Schlüssels einer Smartcard (11), die herkömmlicherweise mit einem Mobilterminal (2) verknüpft ist;
- Verschlüsseln des Zufallssitzungsschlüssels mit dem öffentlichen Schlüssel der Smartcard (11);
- Verschlüsseln der Benutzungsrechtedatei mit dem Zufallssitzungsschlüssel;
- Senden (15, 16) der durchgeführten Verschlüsselungen an das Mobilterminal und Empfangen der Verschlüsselungen im Mobilterminal (2);
- Entschlüsseln des Zufallssitzungsschlüssels im Mobilterminal mittels des privaten Schlüssels seiner Smartcard; und
- Entschlüsseln der Benutzungsrechtedatei im Mobilterminal mit dem im vorherigen Entschlüsselungsschritt erworbenen Zufallssitzungsschlüssel, um die Benutzungsrechtedatei zu erwerben;
wobei der benutzte private Schlüssel ein privater Schlüssel einer WIM-Anwendung (WIM = Wireless Identification Module - drahtloses Identifikationsmodul) der Smartcard ist.

2. Ein Verfahren nach Anspruch 1, wobei nach Empfang einer Anforderung zum Kauf einer Benutzungsrechtedatei ein Kostenpreis für den Erwerb der Benutzungsrechtedatei an das Mobilterminal gesendet und die Annahme des Kostenpreises angefordert wird.

3. Ein Verfahren nach Anspruch 2, wobei der Kauf des Inhalts nach Annahmebestätigung wahlweise mittels Vorauszahlung oder gestundeter Zahlung durchgeführt wird.

4. Ein Verfahren nach Anspruch 1, wobei zwischen dem Mobilterminal (2) und einem Server (19) der Benutzungsrechtedatei ein wechselseitiger Identifika¬tionsprozess durchgeführt wird.

5. Ein Verteilungs-und Managementsystem für mit einem gekauften Inhalt für Mobilterminals verknüpfte Benutzungsrechte, umfassend einen Server (19), der mit Mitteln (3) zum Empfang einer Anforderung zum Kauf einer mit dem Inhalt einer digitalen Datei verknüpften Benutzungsrechtedatei versehen ist, so dass die digitale Datei nicht ohne die Benutzungsrechtedatei benutzt werden kann, weil die Benutzungsrechtedatei die erlaubte Benutzung des gekauften Inhalts vorschreibt, und das System so eingerichtet ist, dass die Benutzungsrechtedatei und die digitale Datei unabhängig voneinander gekauft werden können; die Mobilterminals (2) eine Smartcard (11) aufweisen, die mit Mitteln zum Speichern eines eigenen privaten Schlüssels versehen ist, und der auch ein öffentlicher Schlüssel zugewiesen ist, und die privaten und öffentlichen Schlüssel zur Durchführung der Verschlüsselung und Entschlüsselung von zwischen verschiedenen Geräten ausgetauschten Signalen von bescheinigenden Stellen gewährt werden; **dadurch gekennzeichnet, dass** der Server (19) umfasst : Mittel (6) zum Erzeugen einer Benutzungsrechtedatei nach Empfang einer Benutzungsrechtedatei-Kaufanforderung, Mittel (7) zum Erzeugen eines Zufallssitzungsschlüssels, Mittel (8) zum Speichern des öffentlichen Schlüssels der Smartcard (11) des Mobilterminals (2) und Mittel (9) zum Verschlüsseln des Zufallssitzungsschlüssels mittels des öffentlichen Schlüssels der Smartcard (11), Mittel (10) zum Verschlüsseln der Benutzungsrechtedatei mittels des Zufallssitzungsschlüssels, Senden (15, 16) der verschlüsselten Signale an das auf den Empfang der verschlüsselten Signale eingerichtete Mobilterminal (2), welches Terminal (2) in seiner Smartcard (11) Mittel zum Entschlüsseln des Zufallssitzungsschlüssels mittels seines privaten Schlüssels zum Erwerb des Zufallssitzungsschlüssels enthält, und das Mobilterminal (2) weiterhin Mittel zum Entschlüsseln der Benutzungsrechtedatei mittels des erworbenen Zufallssitzungsschlüssels umfasst; dies alles, so dass das Mobilterminal (2) nach Ausgabe einer Anforderung zum Kauf einer Benutzungsrechtedatei die Benutzungsrechtedatei erwirbt;
wobei die Mittel zur Entschlüsselung des Zufallssitzungsschlüssels mittels des privaten Schlüssels darauf eingerichtet sind, als privaten Schlüssel einen privaten Schlüssel einer WIM-Anwendung der Smartcard zu verwenden.

6. Ein System nach Anspruch 5, weiterhin umfassend Mittel (5) zum Prüfen, ob der Benutzer, der die Benutzungsrechtedatei herunterlädt, einen Saldo für den angeforderten Inhalt zu zahlen hat, und im negativen Fall die Datei nicht gesendet wird.

7. Ein System nach Anspruch 5, wobei zwischen dem Server (19) und dem Mobilterminal (2) eine wechselseitige Identifizierung durchgeführt wird.

## Revendications

1. Procédé de distribution et de gestion pour des droits d'utilisation associés à un contenu acheté pour des terminaux mobiles, dans lequel une demande d'achat d'un fichier de droits d'utilisation est reçue, laquelle est associée à l'achat d'un contenu inclus dans un fichier numérique, de sorte que le fichier numérique ne peut pas être utilisé sans le fichier de droits d'utilisation, dans la mesure où le fichier de droits d'utilisation spécifie l'utilisation permise du contenu acheté, le procédé permettant que le fichier de droits d'utilisation et le fichier numérique soient achetés indépendamment, le procédé comprenant en outre l'utilisation de clés privée et publique accordées par des autorités de certification à différents dispositifs afin de rendre possible de crypter et de décrypter des signaux échangés entre lesdits dispositifs, chaque clé privée étant connue uniquement du dispositif respectif auquel elle correspond, alors que les clés publiques sont connues de la totalité desdits dispositifs, **caractérisé en ce que,** après réception de ladite demande, le procédé comprend les étapes suivantes consistant à :
- engendrer une clé aléatoire de session et générer le fichier de droits d'utilisation,
- obtenir la clé publique d'une carte intelligente (11), ladite carte intelligente étant associée de façon classique à un terminal mobile (2),
- crypter la clé aléatoire de session avec la clé publique de la carte intelligente (11),
- crypter le fichier de droits d'utilisation avec la clé aléatoire de session,
- envoyer (15, 16) les cryptages exécutés au terminal mobile, les cryptages étant reçus dans le terminal mobile (2),
- décrypter dans le terminal mobile, la clé aléatoire de session au moyen de la clé privée de sa carte intelligente, et
- décrypter, dans le terminal mobile, le fichier de droits avec la clé aléatoire de session, obtenue dans l'étape de décryptage précédente, pour obtenir ledit fichier de droits d'utilisation,
la clé privée utilisée étant une clé privée d'une application de module d'identification sans fil (WIM) de la carte intelligente.

2. Procédé selon la revendication 1, dans lequel, après avoir reçu une demande d'achat d'un fichier de droits d'utilisation, un coût représentant l'obtention dudit fichier de droits d'utilisation est envoyé au terminal mobile et une acceptation est demandée.

3. Procédé selon la revendication 2, dans lequel l'achat du contenu est exécuté sélectivement au moyen d'un pré-paiement ou d'un paiement différé, après avoir reçu une confirmation d'acceptation.

4. Procédé selon la revendication 1, dans lequel un procédé d'identification mutuelle est exécuté entre le terminal mobile (2) et un serveur (19) du fichier de droits d'utilisation.

5. Système de distribution et de gestion destiné à des droits d'utilisation associés à un contenu acheté pour des terminaux mobiles, comprenant un serveur (19) muni d'un moyen (3) destiné à recevoir une demande d'achat d'un fichier de droits d'utilisation associé à un contenu inclus dans un fichier numérique, de sorte que le fichier numérique ne peut pas être utilisé sans le fichier de droits d'utilisation, dans la mesure où le fichier de droits d'utilisation spécifie l'utilisation permise du contenu acheté, le système étant agencé de manière à ce qu'il soit possible d'acheter le fichier de droits d'utilisation et le fichier numérique indépendamment, les terminaux mobiles (2) comportant une carte intelligente (11) munie d'un moyen destiné à mémoriser une clé privée qui lui est propre à laquelle une clé publique est également affectée, lesdites clés publique et privée étant accordées par des autorités de certification pour exécuter le cryptage et le décryptage des signaux échangés entre différents dispositifs, **caractérisé en ce que** le serveur (19) comprend un moyen (6) destiné à engendrer le fichier de droits d'utilisation à la réception d'une demande d'achat de fichier de droits d'utilisation, un moyen (7) destiné à générer une clé aléatoire de session, un moyen (8) destiné à mémoriser la clé publique de la carte intelligente (11) du terminal mobile (2), et un moyen (9) destiné à crypter la clé aléatoire de session au moyen de la clé publique de la carte intelligente (11), un moyen (10) destiné à crypter les fichiers de droits d'utilisation au moyen de la clé aléatoire de session, envoyant (15, 16) les signaux cryptés au terminal mobile (2), lequel est agencé pour recevoir lesdits signaux cryptés, ledit terminal (2) comprenant, dans sa carte intelligente (11), un moyen destiné à décrypter la clé aléatoire de session au moyen de sa clé privée afin d'obtenir ladite clé aléatoire de session, le terminal mobile (2) comprenant en outre un moyen destiné à décrypter le fichier de droits d'utilisation au moyen de la clé aléatoire de session obtenue, l'ensemble étant tel que le terminal mobile (2) obtient ledit fichier de droits d'utilisation après avoir effectué une demande d'achat d'un fichier de droits d'utilisation,
le moyen destiné à décrypter la clé aléatoire de session au moyen de la clé privée étant agencé pour utiliser en tant que dite clé privée, une clé privée d'une application de module d'identification sans fil (WIM) de la carte intelligente.

6. Système selon la revendication 5, comprenant en outre un moyen (5) destiné à vérifier si l'utilisateur qui télécharge le fichier de droits d'utilisation dispose d'un solde pour payer le contenu demandé et, dans un cas négatif, il n'est pas envoyé.

7. Système selon la revendication 5, dans lequel une identification mutuelle entre le serveur (19) et le terminal mobile (2) est exécutée.
